# EUROPÄISCHE PATENTSCHRIFT

(11) **EP 2 271 969 B1**
(45) Veröffentlichungstag und Bekanntmachung des Hinweises auf die Patenterteilung: **19.12.2012**
(21) Anmeldenummer: 08734488.3
(22) Anmeldetag: 18.04.2008
(51) Int. Cl.: G05D 7/00

(54) **ARMATURENKOMBINATION ZUR REGELUNG DER DURCHFLUSSMENGE ODER DES DIFFERENZDRUCKES**
VALVE COMBINATION FOR REGULATING THE FLOW RATE OR DIFFERENTIAL PRESSURE
SYSTÈME DE ROBINETTERIE PERMETTANT DE RÉGULER LE DÉBIT OU LA DIFFÉRENCE DE PRESSION

(43) Veröffentlichungstag der Anmeldung: 12.01.2011
(73) Patentinhaber: Oventrop GmbH & Co. KG, 59939 Olsberg (DE)
(72) Erfinder: LÖFFLER, Gerhard, 59939 Olsberg (DE)
(74) Vertreter: Köchling, Conrad-Joachim
(86) Internationale Anmeldenummer: PCT/DE2008/000669
(87) Internationale Veröffentlichungsnummer: WO 2009/127173

(56) Entgegenhaltungen:
- WO-A-2004/107075
- DE-U- 1 855 899
- GB-A- 2 039 344

## Beschreibung

Die Erfindung betrifft eine Armaturenkombination zur Regelung der Durchflussmenge oder des Differenzdruckes in flüssigkeitsführenden Heizungs- oder Kühlanlagen, bestehend aus einem ein- oder mehrteiligem, mit Zulaufstutzen, Ablaufstutzen und einem dazwischen angeordnetem Anschlussstutzen versehenen Gehäuse, einer im Anschlussstutzen axial angeordneter Regeleinrichtung, die mit einer von einem Sollwert beaufschlagten, beweglichen Trennwand ausgestattet ist, welche mittels eines auf einen ersten Sitz wirkenden Verschlussstückes einen Regelquerschnitt differenzdruckgesteuert verändert, wobei die Regeleinrichtung den Differenzdruck mittels über eine ebenfalls axial im Anschlussstutzen angeordneten erste Durchflussreguliereinrichtung, welche durch ein aus dem Gehäuse ragendes Betätigungsteil, das auf einen zweiten Sitz wirkt, verstellbar ist und mittels eine axial oder koaxial zu dieser angeordneten, voreinstellbaren zweite Durchflussreguliereinrichtung auf einen vorgegebenen Wert konstant hält, wobei der Durchflussquerschnitt einstellbar ist.

Aus der GB 2039344 ist eine Armaturenkombination bekannt.

Aus der WO 2006/031161 A 1 ist eine Armaturenkombination mit einem einteiligen Gehäuse bekannt, in das ein Teil zur Differenzdruckregelung, ein Teil zur Volumenstrombegrenzung, Messnippel und eine Absperrvorrichtung integriert sind. Diese Armaturenkombination ist so ausgebildet, dass der Volumenstrom mittels eines Werkzeuges stufenlos voreinstellbar ist und bei jedem Voreinstellwert stets der komplette Ventilhub möglich ist.

Diese Ausführung hat den Nachteil, dass die Voreinstellung von der schlecht zugänglichen Stellantriebsseite aus erfolgt, und dass der Stellantrieb zum Verändern und/oder Ablesen des Voreinstellwertes abgenommen werden muss.

Aus der DE 103 23 981 B 3 ist eine Heizungs-Ventilanordnung mit einem zweiteiligen Gehäuse bekannt, bei der eine erste Ventileinrichtung, die einen Ventilsitz und ein Ventilelement aufweist, in dem ersten Teil des Gehäuses und eine zweite Ventilanordnung, die den Differenzdruck über der ersten Ventileinrichtung konstant hält, in dem zweiten Teil des Gehäuses untergebracht ist.

Diese Ausführungsform hat den Nachteil, dass die Voreinstellung der Durchflusswerte nicht vorgesehen ist.

Bei beiden vorbekannten Ausführungsformen sind die Komponenten axial zueinander angeordnet und in einem zur Durchströmrichtung des Mediums quer gerichteten Stutzen angeordnet.

Aus der DE 198 24 630 B 4 ist eine Ventilkombination bekannt, bei der die einzelnen Komponenten nicht axial verbaut worden sind. Diese Anordnung benötigt einen größeren Platzbedarf, wobei zudem eine bestimmte Reihenfolge, in der die Komponenten eingebaut werden müssen, vorgesehen ist.

Bei den bekannten Ventilanordnungen mit Voreinstellung besteht der Nachteil, dass die Voreinstellung immer von der Stellantriebsseite her erfolgen muss. Dies ist vor allem deswegen nachteilig, weil solche Armaturenkombinationen vorzugsweise im Deckenbereich von Räumen zur Regelung von Kühldecken und dergleichen eingebaut werden und sie mit aufgeschraubten elektromotorischen, elektrothermischen oder thermischen Stellantrieben bevorzugt senkrecht stehend eingebaut werden, um die Stellantriebe vor von den Rohrleitungen tropfendem Schwitzwasser zu schützen. In einer solchen Einbaulage weist die Voreinstellung sowie die angebrachte Skala zur schlecht zugänglichen Raumdecke. Die entsprechenden Elemente sind daher sowohl für die Einstellung als auch für die Ablesung schlecht zugänglich und schlecht sichtbar. Hinzu kommt, dass bei den bekannten Konstruktionen zunächst immer der Stellantrieb demontiert werden muss, um die Voreinstellung bedienen und/oder ablesen zu können.

Ausgehend von diesem Stand der Technik liegt der Erfindung die Aufgabe zugrunde, eine kostengünstig zu fertigende Armaturenkombination mit kleinen Abmessungen zu schaffen, bei der auch bei aufgeschraubtem Stellantrieb die Bedienung der Voreinstellung gut zugänglich ist und bei der die jeweils gewählten Voreinstellwerte bei aufgeschraubtem Stellantrieb gut ablesbar sind.

Zur Lösung dieser Aufgabe schlägt die Erfindung vor, dass der Durchflussquerschnitt bei montiertem, auf das Betätigungsteil wirkenden Stellantrieb mittels einer vom Stellantrieb nicht verdeckten Handhabe verstellbar ist und dass bei montiertem Stellantrieb die Stellung der Handhabe auf einer Anzeigeeinrichtung, welche nicht vom Stellantrieb verdeckt wird, ablesbar ist und die Anzeigeeinrichtung die Voreinstellung des Durchflussquerschnittes abbildet.

Durch diese Ausbildung ist es möglich, den Durchflussquerschnitt auch bei montiertem Stellantrieb einzustellen, da die Handhabe nicht vom Stellantrieb verdeckt ist. Des Weiteren ist die Einstellung bei montiertem Stellantrieb ablesbar.

Durch die axiale Anordnung der drei Baugruppen-Regeleinrichtung, erste Durchflussreguliereinrichtung und zweite Durchflussreguliereinrichtung - im Anschlussstutzen, wobei die zweite Durchflussreguliereinrichtung auch koaxial um die erste Durchflussreguliereinrichtung angeordnet sein kann, kann die Armaturenkombination platzsparend und mit kleinen Abmessungen hergestellt werden. Dies ist wichtig, da die Einbauverhältnisse für eine solche Armatur oft sehr beengt sind. Dies trifft insbesondere für die bevorzugte Anwendung in Kühldeckenanlagen zu, wo sie innerhalb abgehängter Decken installiert werden müssen.

Nach dem Einbau der Armaturenkombination findet in der Regel eine Funktionsprüfung der Heizungs- und/oder Kühlanlage statt. Hierbei ist der Stellantrieb auf die Armaturenkombination aufgeschraubt, da er Bestandteil der Funktionsprüfung ist. Im Rahmen der Anlagenfunktionsprüfung erfolgt auch die Feinabstimmung des hydraulischen Abgleichs der einzelnen Anlagenteile, zum Beispiel Kühldecken. Hierzu wird die Voreinstellung der zweiten Durchflussreguliereinrichtung verändert und damit der maximal mögliche Durchfluss der einzelnen Anlagenteile vorgegeben. Da in einer solchen Anlage meist mehrere hundert bis mehrere tausend dieser Armaturenkombinationen verbaut sind, bedeutet es einen erheblichen Mehraufwand, wenn hierzu zunächst der Stellantrieb abgeschraubt und dann nach der Veränderung der Voreinstellung wieder aufgeschraubt werden muss. Nach der Funktionsprüfung ist es weiterhin erforderlich, ein Einregulierungsprotokoll zu erstellen. Hierzu werden die Voreinstellwerte jeder einzelnen Armaturenkombination, deren Einbauposition genau definiert ist, abgelesen und in das Protokoll eingetragen. Wenn zum Ablesen der Voreinstellwerte die Stellantriebe ab- und später wieder angeschraubt werden müssen, entsteht auch hier ein erheblicher Mehraufwand.

Auch um im späteren Betrieb der Anlage Fehlfunktionen schnell beseitigen zu können, ist es hilfreich, wenn die Voreinstellwerte ohne den zusätzlichen Aufwand der Demontage des Stellantriebes abgelesen und korrigiert werden können. Durch die erfindungsgemäße Lösung wird der geschilderte Aufwand minimiert, da sämtliche notwendigen Vorgänge bei montiertem Stellantrieb durchgeführt werden können.

Bevorzugt ist vorgesehen, dass die Anordnung so vorgenommen ist, dass in Fließrichtung dem Zulaufstutzen folgend die erste Regeleinrichtung dann die erste Durchflussreguliereinrichtung, dann die zweite Durchflussreguliereinrichtung und anschließend der Ablaufstutzen angeordnet ist.

Auch kann vorgesehen sein, dass in Fließrichtung zuerst die erste Regeleinrichtung und dann die erste Durchflussreguliereinrichtung angeordnet ist, wobei die Voreinstellung der Durchflusswerte alternativ oder zusätzlich über eine einstellbare Hubbegrenzung der ersten Durchflussreguliereinrichtung erfolgt.

In an sich bekannter Weise kann vorgesehen sein, dass die bewegliche Trennwand als Membran ausgebildet ist.

Zudem kann vorgesehen sein, dass die Anzeigeeinrichtung eine Skala ist.

Eine bevorzugte Weiterbildung wird darin gesehen, dass der Anschlussstutzen an beiden Enden offen ausgebildet ist, dass mit einer den Anschlussstutzen durchgreifenden, mit einer Handhabe versehenen Betätigungsspindel der Durchflussquerschnitt der zweiten Durchflussreguliereinrichtung einstellbar ist, und dass das Betätigungsteil zur Verstellung der ersten Durchflussreguliereinrichtung das der Handhabe gegenüber liegende Ende des Anschlussstutzens durchgreift.

Durch die an beiden Enden mögliche Zugänglichkeit des Anschlussstutzens, in dem platzsparend die drei Baugruppen angeordnet sind, kann von der einen Seite des Anschlussstutzens die Verstellung der ersten Durchflussreguliereinrichtung durch den Stellantrieb erfolgen und gegenüberliegend auf der anderen Seite die Betätigung der zweiten Durchflussreguliereinrichtung mittels der Handhabe.

Da diese Armaturenkombinationen vorzugsweise in Kühldeckenanlagen innerhalb abgehängter Decken eingebaut werden und die Stellantriebe bevorzugt, um sie vor dem von den Rohrleitungen tropfenden Schwitzwasser zu schützen, senkrecht stehend installiert werden, bietet diese Ausbildung den Vorteil, dass bei aufgeschraubtem, zur Decke hin zeigendem Stellantrieb, die Betätigung der Voreinstellung sowie die Ablesbarkeit der gewählten Voreinstellwerte von der gut zugänglichen, zum Raum hin zeigenden Seite erfolgen kann.

Bevorzugt ist zudem vorgesehen, dass der Anschlussstutzen an seinem der Handhabe gegenüber liegenden Ende mit Befestigungsmöglichkeiten für den Stellantrieb ausgestattet ist.

Die Befestigungsmöglichkeiten ermöglichen in einfacher Weise das Anbringen des Stellantriebes. Als Befestigungsmöglichkeiten sind zum Beispiel Gewinde- oder Schnappverbindungen möglich.

Bevorzugt ist ferner vorgesehen, dass die zweite Durchflussreguliereinrichtung durch mindestens zwei mittels der Handhabe gegeneinander verdreh- und/oder verschiebbare Teile gebildet ist, welche mit sich überdeckenden Durchtrittsöffnungen versehen sind, wobei durch Verdrehen und/oder Verschieben mindestens eines der Teile die Größe des durch die überdeckenden Durchtrittsöffnungen gebildeten Durchtritts einstellbar ist.

In dieser Ausführung wird die Veränderung des Durchflussquerschnittes durch eine Drehbewegung der Handhabe vorgenommen, wobei es vorteilhaft ist, die beiden, den Durchflussquerschnitt bildenden Durchtrittsöffnungen gegeneinander zu verdrehen und/oder sie gegeneinander axial zu verschieben. Bei der bevorzugten Ausführung werden beide Teile sowohl gegeneinander verdreht als auch gegeneinander axial verschoben.

Die Verschiebung erfolgt dadurch, dass das eine mit Gewinde versehene Teil durch die Drehbewegung der Handhabe angetrieben und das andere ebenfalls mit Gewinde versehene Teil um das Maß der dem Drehwinkel entsprechende Gewindesteigung axial verschoben wird. Dies bewirkt gleichzeitig eine Hubbegrenzung der ersten Durchflussreguliereinrichtung, was ebenfalls zur Drosselung der Durchflusswerte genutzt werden kann. Auch hierbei ist ein besonderer Vorteil, die platzsparende Bauweise der Voreinstellung.

Des Weiteren ist bevorzugt, dass die Regeleinrichtung zusammen mit der ersten und zweiten Durchflussreguliereinrichtung eine Baugruppe bildet, die mittels Rast- oder Gewindeverbindungen fest verbunden ist und als eine Einheit in das Gehäuse oder den Anschlussstutzen einschiebbar ist.

Ein Vorteil liegt in der schnellen und problemlosen Austauschmöglichkeit des gesamten Innenlebens der Armatur. Hierdurch ist die Armatur sehr wartungsfreundlich ausgebildet, und es können durch den Austausch auch die Durchflussbereiche der Armatur schnell geändert werden. Dies kann bei Anlagenänderungen oder Anlagenerweiterungen erforderlich sein. Zusätzlich wird hierdurch auch die Montage der Armatur im Herstellungswerk vereinfacht und damit kostengünstiger.

Zudem ist vorgesehen, dass das Gehäuse mit einem oder mehreren Messstutzen zur Messung von Druck und/oder Temperatur versehen ist.

Für die Erstellung von Einregulierungsprotokollen wird häufig die Messung des über die Armatur geregelten Differenzdruckes vorgeschrieben. Hierzu ist das Gehäuse mit einem oder mehreren Messstutzen versehen. Die Messstutzen sind aber auch bei einer eventuell erforderlichen Fehlersuche in der Anlage hilfreich. Sie ermöglichen neben der Messung von Drücken auch die Messung von Temperaturen.

Bevorzugt ist ferner vorgesehen, dass die Handhabe mit Anschlägen zur Begrenzung der Dreh- und/oder Hubbewegung ausgestattet ist.

Die Begrenzung der Drehbewegung der Handhabe durch Anschläge ist hilfreich, da die Hubbewegung des einen verdreh- und verschiebbaren Teiles hierdurch in einfacher Weise beschränkt wird.

Bevorzugt ist zudem vorgesehen, dass die Regeleinrichtung mittels der als Membran ausgebildeten Trennwand einen Regelquerschnitt differenzdruckgesteuert verändert, wobei die Membran als Rollmembran mit konstanter Wirkfläche ausgebildet ist, die einerseits über einen Druckkanal vor der ersten Durchflussreguliereinrichtung und andererseits über einen Druckkanal hinter der zweiten Durchflussreguliereinrichtungen beaufschlagt ist.

Die Ausbildung der Membran als Rollmembran bietet den Vorteil, dass die Membran bei kleinem Bauraum einen großen Hub durchführen kann. Die einer Rollmembran eigene konstante Wirkfläche bietet den Vorteil einer verringerten Proportionalabweichung des Reglers. Die Abnahme des Druckes vor der ersten Durchflussreguliereinrichtung und nach der zweiten Durchflussreguliereinrichtung bietet den Vorteil, dass die Regeleinrichtung den Differenzdruck über beide Drosselquerschnitte konstant hält und damit für eine hohe Ventilautorität der Armaturenkombination sorgt.

Zudem kann vorgesehen sein, dass Armaturenkombination mittels der ersten und/oder der zweiten Durchflussreguliereinrichtung flüssigkeitsdicht absperrbar ist.

Die flüssigkeitsdichte Absperrung der Armaturenkombination bietet den Vorteil, dass keine weitere Absperrarmatur zur Wartung der nachgeschalteten Anlagenteile in die Rohrleitung eingebaut werden muss.

Vorzugsweise ist ferner vorgesehen, dass die Handhabe drehschlüssig, aber axial verschiebbar auf der Betätigungsspindel befestigt ist und in einer ersten Hublage gegenüber dem Gehäuse frei drehbar ist und in einer zweiten Hublage drehschlüssig mit dem Gehäuse oder einen an diesem drehfest montiertem Teil, wie Schraubkappe verriegelt ist.

Als Vorteil ergibt sich hieraus, eine gegen unbeabsichtigtes Verstellen gesicherte Voreinstellung der Durchflusswerte. Insbesondere bei dem Einbau innerhalb abgehängter Decken von Kühldeckenanlagen ist dies wichtig, da hier nacheinander verschiedene Gewerke (Elektro, Heizung, Kühlung, Lüftung, Isolierung etc.) arbeiten und dadurch eine nicht gesicherte Voreinstellung unbeabsichtigt verstellt werden könnte.

Bevorzugt ist zudem vorgesehen, dass die Handhabe und die Befestigungsspindel mit hubbegrenzenden Anschläge versehen sind.

Es ist bevorzugt vorgesehen, dass die Handhabe mit ein oder mehreren, drehbegrenzenden Anschlägen zur Begrenzung der Drehbewegung ausgestattet ist, welche gegen einen Gehäuseanschlag wirken, wobei vorzugsweise der Gehäuseanschlag gleichzeitig als Zeiger ausgebildet ist.

Die Ausbildung des Gehäuseanschlages als Zeiger bildet den Vorteil, dass die Drehstellung der Handhabe mittels einer auf dieser aufgedruckten Skala leicht bestimmt werden kann und das neben dem Gehäuseanschlag kein zusätzlicher Zeiger erforderlich ist.

Zudem ist bevorzugt vorgesehen, dass die Handhabe mit ein oder mehreren, über den Gehäusedurchmesser vorstehenden schräg angeordneten umlaufenden Flächen versehen ist, auf welche eine Skala aufgebracht ist, welche die Stellung der sich überdeckenden Durchtrittsöffnungen abbildet.

Durch das Aufdrucken der Skala auf eine oder bevorzugt mehrere schräge Flächen wird eine gute Ablesbarkeit der Skala von mehreren Seiten erreicht. Dies ist vor allem wichtig, wenn die Sicht auf die Skala durch andere Anlagenteile verdeckt wird.

Des Weiteren ist bevorzugt vorgesehen, dass die Handhabe durch einen Sicherungsring, der zwischen Handhabe und Gehäuse oder daran montierten Teilen, wie Schraubkappe geschoben ist, in der zweiten Hublage gehalten werden kann.

Um eine zusätzliche Sicherung der Voreinstellung gegenüber unbeabsichtigtem Verstellen zu erreichen, kann der Sicherungsring montiert werden. Dadurch bleibt die Verzahnung der Teile stets im Eingriff und die Handhabe kann nicht verdreht werden.

Zudem ist bevorzugt vorgesehen, dass die Handhabe durch eine Feder in eine der beiden Hublagen gedrückt ist und die zweite Hublage nur durch axiale Krafteinleitung auf die Handhabe einstellbar ist.

Durch diese Anordnung in Verbindung mit der Feder ergibt sich der Vorteil, dass die Handhabe nach der Betätigung stets in ihre Grundstellung verstellt ist, in der sie mit dem entsprechenden Teil verriegelt ist und damit gegen unbeabsichtigtes Verstellen gesichert ist. Erst durch Verschiebung der Handhabe entgegen der Kraft der Feder kommt die Handhabe mit den entsprechenden Elementen in Eingriff, die eine Verstellung und Einstellung ermöglichen.

Zudem kann bevorzugt vorgesehen sein, dass der Sicherungsring mit einer über dem Gehäusedurchmesser vorstehende Handhabe versehen ist.

Auch kann vorgesehen sein, dass das die Handhabe mit einer Plombierbohrung versehen ist.

Zudem kann vorgesehen sein, dass das der Gehäuseanschlag mit einer Plombierbohrung versehen ist, welche mit der Plombierbohrung der Handhabe in Überdeckung bringbar ist.

Ein Ausführungsbeispiel der Erfindung ist in der Zeichnung dargestellt und im Folgenden näher beschrieben. Es zeigt:
- Figur 1: die Armaturenkombination mit aufgeschraubtem Stellantrieb in zwei verschiedenen Stellungen im Mittellängsschnitt gesehen;
- Figur 2: die Regeleinrichtung als Einzeldarstellung in zwei verschiedenen Hubstellungen;
- Figur 3: die erste Durchflussreguliereinrichtung in zwei verschiedenen Hubstellungen;
- Figur 4: die Armaturenkombination in zwei verschiedenen Hubstellungen;
- Figur 5: eine Ansicht der Armaturenkombination mit Sicherungsringe und Druckmessstutzen.

In der Zeichnung ist eine Armaturenkombination 1 zur Regelung der Durchflussmenge oder des Differenzdruckes in flüssigkeitsführenden Heizungs- oder Kühlanlagen gezeigt. Sie besteht aus einem Gehäuse 2 mit Zulaufstutzen 10 und Ablaufstutzen 11 sowie einem dazwischen angeordneten Anschlussstutzen 6. Im Anschlussstutzen 6 ist axial eine Regeleinrichtung 3 angeordnet, die mit einer von einem Sollwert beaufschlagten, beweglichen Trennwand 20 ausgestattet ist. Diese verändert mittels eines auf einen ersten Sitz 21 wirkenden Verschlussstückes 22 einen Regelquerschnitt 14 differenzdruckgesteuert, wobei die Regeleinrichtung 3 den Differenzdruck mittels einer ebenfalls axial im Anschlussstutzen 6 angeordneten ersten Durchflussreguliereinrichtung 4, welche durch ein aus dem Gehäuse 2 ragendes Betätigungsteil 8, dass auf einen zweiten Sitz 24 wirkt, verstellbar ist und mittels einer axial oder koaxial zu dieser angeordneten, voreinstellbaren zweiten Durchflussreguliereinrichtung 5 auf einem vorgegebenen Wert konstant hält. Der Durchflussquerschnitt 9 ist bei montiertem, auf das Betätigungsteil 8 wirkenden Stellantrieb 29 mittels einer vom Stellantrieb 29 nicht verdeckten Handhabe 7 verstellbar. Bei montiertem Stellantrieb 29 ist die Stellung der Handhabe 7 auf einer Anzeigeeinrichtung 19, welche nicht vom Stellantrieb 29 verdeckt ist, ablesbar, wobei die Anzeigeeinrichtung 19 die Voreinstellung des Durchflussquerschnittes 9 abbildet.

Am Betätigungsteil 8 ist ein Verschlussstück 24' angeordnet, welches mit dem zweiten Sitz 24 zusammenwirkt. Die Anordnung der Armaturenkombination 1 ist so vorgenommen, dass in Fließrichtung dem Zulaufstutzen 10 folgend, die erste Regeleinrichtung 3, dann die erste Durchflussreguliereinrichtung 4, danach die zweite Durchflussreguliereinrichtung 5 und anschließend der Ablaufstutzen 11 angeordnet sind.

Die bewegliche Trennwand 20 ist als Membran ausgebildet. Die Anzeigeeinrichtung 19 ist eine Skala.

Der Anschlussstutzen 6 ist an beiden Enden offen ausgebildet. Mit einer den Anschlussstutzen 6 durchgreifenden, mit der Handhabe 7 versehenen Betätigungsspindel 23 ist der Durchflussquerschnitt 9 der zweiten Durchflussreguliereinrichtung 5 einstellbar. Das Betätigungsteil 8 zur Verstellung der ersten Durchflussreguliereinrichtung 4 durchgreift das der Handhabe 7 gegenüberliegende Ende 12 des Anschlussstutzens 6. Auf diese Weise kann von der einen Seite des Anschlussstutzens 6 her, die Verstellung der ersten Durchflussreguliereinrichtung 4 durch den Stellantrieb 29 erfolgen und gegenüberliegend auf der anderen Seite die Betätigung der zweiten Durchflussreguliereinrichtung 5 mittels der Handhabe 7.

Am Ende 12 des Anschlussstutzens 6 sind zudem Befestigungsmöglichkeiten für den Stellantrieb 29 vorgesehen. Solche Befestigungsmöglichkeiten können beispielsweise Gewindeverbindungen oder auch Schnappverbindungen sein.

Die Veränderung des Durchflussquerschnittes 9 wird durch eine Drehbewegung der Handhabe 7 erreicht. Hierdurch werden die beiden den Durchflussquerschnitt 9 bildenden Durchtrittsöffnungen 17, 18 gegeneinander verdreht und/oder sie werden gegeneinander axial verschoben. Im Ausführungsbeispiel werden die verdrehbaren und verschiebbaren Teile 15 beziehungsweise 16 sowohl gegeneinander verdreht als auch axial zueinander verschoben.

Die Verschiebung erfolgt dadurch, dass das mit Gewinde versehene Teil 16 durch die Drehbewegung der Handhabe 7 angetrieben, das ebenfalls mit einem Gewinde versehene Teil 15 um das Maß der dem Drehwinkel entsprechenden Gewindesteigung axial verschiebt. Dies bewirkt gleichzeitig eine Hubbegrenzung der ersten Durchflussreguliereinrichtung 4, was ebenfalls zur Drosselung der Durchflusswerte genutzt werden kann.

Im Ausführungsbeispiel bildet die Regeleinrichtung 3 zusammen mit der ersten und zweiten Durchflussreguliereinrichtung 4,5 eine gemeinsame Baugruppe, die mittels Rast- oder Gewindeverbindungen 30 fest verbunden sind. Somit können sie als Einheit in das Gehäuse 2 beziehungsweise den Anschlussstutzen 6 eingeschoben werden. Zusätzlich sind am Gehäuse noch Messstutzen 31, 32 zur Messung von Druck- und/oder Temperatur vorgesehen. Die Handhabe 7 ist zudem mit Anschlägen 33 zur Begrenzung der Dreh- und/oder Hubbewegung versehen.

Die Regeleinrichtung 3 verändert mittels der als Membran ausgebildeten Trennwand 20 einen Regelquerschnitt 14 differenzdruckgesteuert, wobei die Membran 20 als Rollmembran mit konstanter Wirkfläche ausgebildet ist, die einerseits über einen Druckkanal 37 vor der ersten Durchflussreguliereinrichtung 4 und andererseits über einen Druckkanal 38 hinter der zweiten Durchflussreguliereinrichtung 5 beaufschlagt ist.

Die Handhabe 7 ist drehschlüssig aber axial verschiebbar auf einer Betätigungsspindel 23 angeordnet und in einer ersten Hublage gegenüber dem Gehäuse 2 frei drehbar sowie in einer zweiten Hublage drehschlüssig mit dem Gehäuse 2 über einen an diesem drehfest montierten Teil, wie einer Schraubkappe 25, verriegelt.

Zudem weisen die Handhabe 7 und die Befestigungsspindel 23 hubbegrenzende Anschläge 26, 27 auf. Die Handhabe 7 ist mit ein oder mehreren drehbegrenzenden Anschlägen 33 zur Begrenzung der Drehbewegung ausgestattet, welche mit einem Gehäuseanschlag zusammenwirken, wobei der Gehäuseanschlag vorzugsweise gleichzeitig als Zeiger 34 ausgebildet ist. Die Handhabe 7 ist durch einen Sicherungsring 35, der zwischen Handhabe 7 und Gehäuse 2 oder daran montierten Teilen wie Schraubkappe 25 geschoben ist, in der zweiten Hublage gehalten. Ferner ist die Handhabe 7 durch eine Feder 28 in eine der beiden Hublagen gedrückt. Die zweite Hublage kann nur durch axiale Krafteinleitung auf die Handhabe 7 entgegen der Kraft der Feder 28 eingestellt werden. Zudem ist der Sicherungsring 35 mit einer über den Gehäusedurchmesser vorstehenden Handhabe 36 versehen. Diese Handhabe 36 weist eine Plombierbohrung auf, während auch der Gehäuseanschlag 34 (Zeiger) mit einer Plombierung versehen ist, die mit der Plombierbohrung der Handhabe 36 in Überdeckung bringbar ist, so dass dann eine Plombierung erfolgen kann.

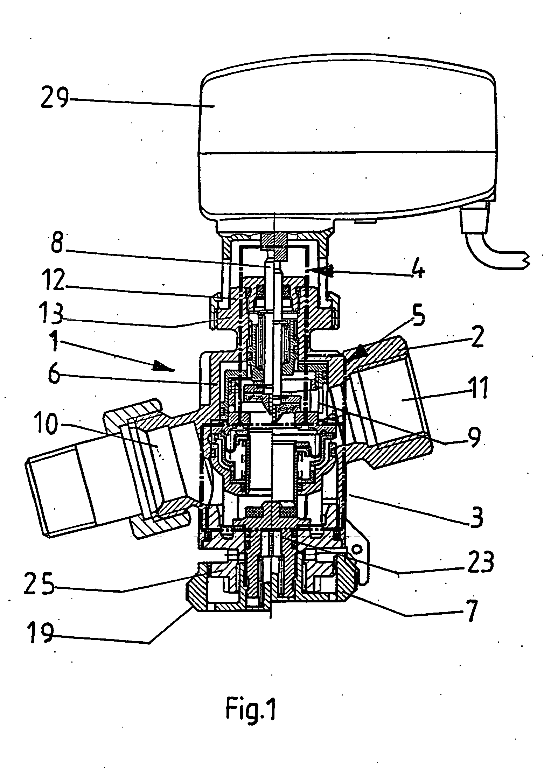

In Figur 1 ist die Handhabe 7 auf der linken Seite in der zweiten Hublage gezeigt, in der sie mit der Schraubkappe 25 drehfest verriegelt ist. Auf der rechten Seite ist sie in der ersten Hublage gezeigt, in der sie gegenüber dem Gehäuse 2 frei drehbar ist.

Sie wird durch die in der Betätigungsspindel 23 montierte Feder stets in die zweite Hublage zurückgedrückt. Mit der drehfest, aber axial beweglich auf der Betätigungsspindel 23 angebrachten Handhabe 7 kann die komplette Regeleinrichtung 3 sowie das drehfest an der Regeleinrichtung 3 befestigte Teil 16 verdreht werden, ohne dass ihre axiale Lage im Anschlussstutzen 6 verändert wird. Durch diese Drehbewegung wird der Durchflussquerschnitt 9, der durch die Durchtrittsöffnung 17,18 bestimmt wird, verändert. Die Durchtrittsöffnung 18 befindet sich im Teil 16 und die Durchtrittsöffnung 17 im Teil 15. Das Teil 15 wird mittels einer Verzahnung 40 drehfest aber axial verschiebbar im Gehäuse 2 gehalten und ist mit einem Gewinde auf das Teil 16 aufgeschraubt. Durch die Drehbewegung der Handhabe 7 verschiebt sich das Teil 15 axial. Auf der linken Seite der Figur 1 wird die untere und auf der rechten Seite die obere Hubstellung gezeigt.

Die zu regelnde Durchflussmenge fließt in der Reihenfolge Zulaufstutzen 10, Regeleinsatz 3, erste und zweite Durchflussreguliereinrichtung 4,5 sowie Ablaufstutzen 11 durch die Armaturenkombination 1. Der Durchfluss kann hierbei sowohl von der ersten Durchflussreguliereinrichtung 4 als auch von der zweiten Durchflussreguliereinrichtung 5 auf einen maximalen Wert begrenzt werden.

Die erste Durchflussreguliereinrichtung 4 wird hierbei von dem aufgeschraubten Stellantrieb 29 eingestellt. Der Stellantrieb 29 wiederum wird zum Beispiel raumtemperaturabhängig gesteuert. Das Betätigungsteil 8 wird durch eine Ventilfeder gegen den Stößel des Stellantriebes 29 gedrückt. Die zweite Durchflussreguliereinrichtung 5 wird auf den für den hydraulischen Abgleich erforderlichen Durchfluss der Armaturenkombination 1 auf einen Festwert begrenzt.

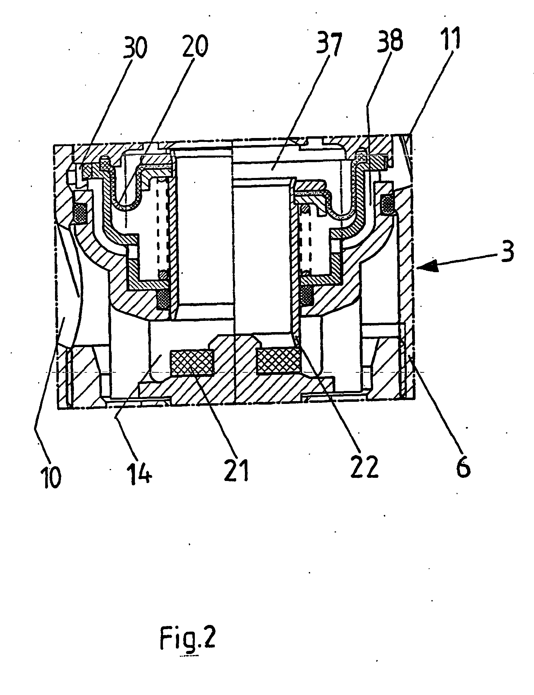

In Figur 2 ist die Regeleinrichtung 3 gezeigt. Die linke Seite zeigt die obere Hublage, die auftreten würde, wenn der Differenzdruck über der ersten und zweiten Durchflussreguliereinrichtung 4,5 kleiner als die auf die Membran wirkende Kraft der Sollwertfeder wäre. Die rechte Seite der Figur 2 zeigt die untere Hublage, bei der das Verschlussstück 22 gegen den Sitz 21 absperrt. Des Weiteren sind die Druckabnahmen vor der ersten Durchflussreguliereinrichtung 4 und nach der zweiten Durchflussreguliereinrichtung 5 zu sehen (Bezugszeichen 37,38). Ebenfalls ist der Druckkanal 38 gezeigt, mittels dessen der Druck hinter der zweiten Durchflussreguliereinrichtung auf die Unterseite der Membran 20 geleitet wird.

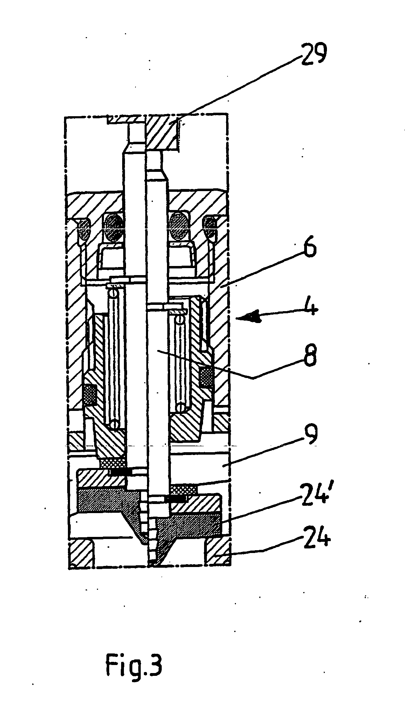

In Figur 3 ist die erste Durchflussreguliereinrichtung 4 mit dem Betätigungsteil 8 gezeigt, welches in einer Ventilfeder gegen den Stößel des Stellantriebes 29 gedrückt wird. Die linke Seite zeigt die voll geöffnete Stellung, während die rechte Seite die geschlossene Stellung der Durchflussreguliereinrichtung 4 zeigt.

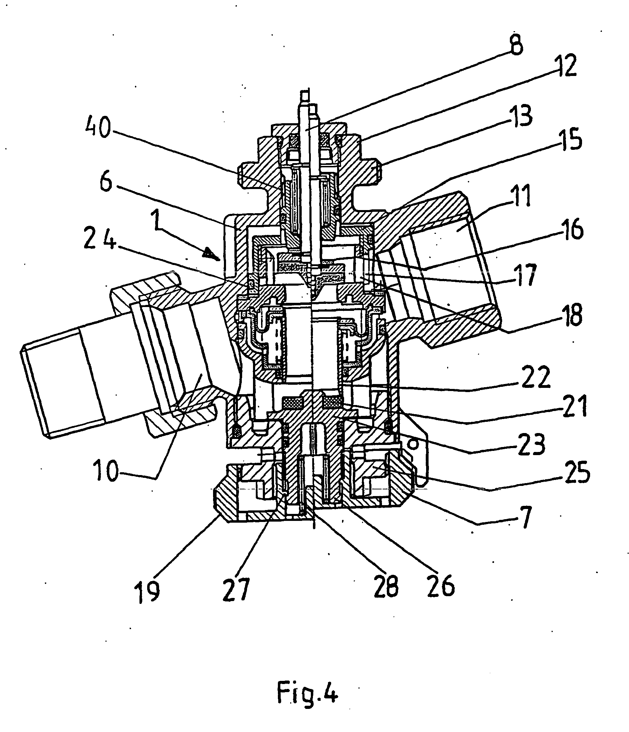

Die Darstellung in Figur 4 entspricht in etwa der Figur 1, wobei lediglich der Stellantrieb 29 nicht gezeigt ist.

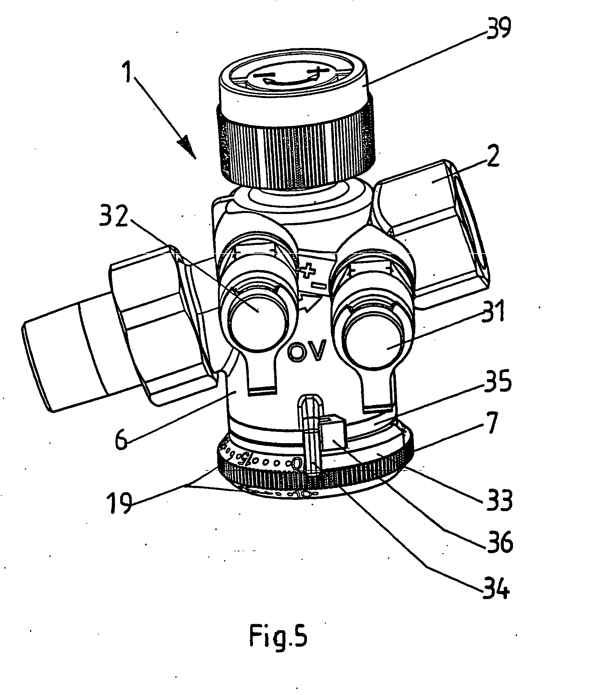

In Figur 5 ist die Armaturenkombination 1 in Ansicht gezeigt. Statt des Stellantriebes 29 ist dabei eine Kappe 39 aufgeschraubt, mittels derer die erste Durchflussreguliereinrichtung 4 manuell abgesperrt werden kann. Weiterhin sind die Messstutzen 31,32 und die mit zwei Skalen 19 versehene Handhabe 7 gezeigt. Die Handhabe 36 des montierten Sicherungsringes 35 ist an dem zum Zeiger 34 ausgebildeten Gehäuseanschlag gedreht gezeigt. In dieser Stellung fluchten die jeweils am Zeiger 34 und Handhabe 36 angebrachten Plombierbohrungen.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Armaturenkombination (1) zur Regelung der Durchflussmenge oder des Differenzdruckes in flüssigkeitsführenden Heizungs- oder Kühlanlagen, bestehend aus einem ein- oder mehrteiligem, mit Zulaufstutzen (10), Ablaufstutzen (11) und einem dazwischen angeordnetem Anschlussstutzen (6) versehenen Gehäuse (2), einer im Anschlussstutzen (6) axial angeordneter Regeleinrichtung (3), die mit einer von einem Sollwert beaufschlagten, beweglichen Trennwand (20) ausgestattet ist, welche mittels eines auf einen ersten Sitz (21) wirkenden Verschlussstückes (22) einen Regelquerschnitt (14) differenzdruckgesteuert verändert, wobei die Regeleinrichtung (3) den Differenzdruck mittels über eine ebenfalls axial im Anschlussstutzen (6) angeordneten erste Durchflussreguliereinrichtung (4), welche durch ein aus dem Gehäuse (2) ragendes Betätigungsteil (8), das auf einen zweiten Sitz (24) wirkt, verstellbar ist und mittels eine axial oder koaxial zu dieser angeordneten, voreinstellbaren zweite Durchflussreguliereinrichtung (5) auf einen vorgegebenen Wert konstant hält, wobei der Durchflussquerschnitt (9) einstellbar ist, **dadurch gekennzeichnet, dass** der Durchflussquerschnitt (9) bei montiertem, auf das Betätigungsteil (8) wirkenden Stellantrieb (29) mittels einer vom Stellantrieb nicht verdeckten Handhabe (7) verstellbar ist und dass bei montiertem Stellantrieb (29) die Stellung der Handhabe (7) auf einer Anzeigeeinrichtung (19) welche nicht vom Stellantrieb verdeckt wird, ablesbar ist und die Anzeigeeinrichtung (19) die Voreinstellung des Durchflussquerschnittes (9) abbildet.

2. Armaturenkombination nach Anspruch 1, **dadurch gekennzeichnet, dass** die Anordnung so vorgenommen ist, dass in Fließrichtung dem Zulaufstutzen (10) folgend die erste Regeleinrichtung (3) dann die erste Durchflussreguliereinrichtung (4), dann die zweite Durchflussreguliereinrichtung (5) und anschließend der Ablaufstutzen (11) angeordnet ist.

3. Armaturenkombination nach Anspruch 1 oder 2, **dadurch gekennzeichnet, dass** in Fließrichtung zuerst die erste Regeleinrichtung (3) und dann die erste Durchflussreguliereinrichtung (4) angeordnet ist, wobei die Voreinstellung der Durchflusswerte alternativ oder zusätzlich über eine einstellbare Hubbegrenzung der ersten Durchflussreguliereinrichtung (4) erfolgt.

4. Armaturenkombination nach einem der Ansprüche 1 bis 3, **dadurch gekennzeichnet, dass** die bewegliche Trennwand (20) als Membran ausgebildet ist.

5. Armaturenkombination nach einem der Ansprüche 1 bis 4, **dadurch gekennzeichnet, dass** die Anzeigeeinrichtung (19) eine Skala ist.

6. Armaturenkombination nach einem der Ansprüche 1 bis 5, **dadurch gekennzeichnet, dass** der Anschlussstutzen (6) an beiden Enden offen ausgebildet ist, dass mit einer den Anschlussstutzen (6) durchgreifenden, mit einer Handhabe (7) versehenen Betätigungsspindel (23) der Durchflussquerschnitt (9) der zweiten Durchflussreguliereinrichtung (5) einstellbar ist, und dass das Betätigungsteil (8) zur Verstellung der ersten Durchflussreguliereinrichtung (4) das der Handhabe (7) gegenüber liegende Ende (12) des Anschlussstutzen (6) durchgreift.

7. Armaturenkombination nach einem der Ansprüche 1 bis 6, **dadurch gekennzeichnet, dass** der Anschlussstutzen (6) an seinem der Handhabe (7) gegenüber liegenden Ende (12) mit Befestigungsmöglichkeiten (13) für den Stellantrieb (29) ausgestattet ist.

8. Armaturenkombination nach einem der Ansprüche 1 bis 7, **dadurch gekennzeichnet, dass** die zweite Durchflussreguliereinrichtung (5) durch mindestens zwei mittels der Handhabe (7) gegeneinander verdreh- und/oder verschiebbare Teile (15,16) gebildet ist, welche mit sich überdeckenden Durchtrittsöffnungen (17,18) versehen sind, wobei durch Verdrehen und/oder Verschieben mindestens eines der Teile (15,16) die Größe des durch die überdeckenden Durchtrittsöffnungen (17,18) gebildeten Durchtritts einstellbar ist.

9. Armaturenkombination nach einem der Ansprüche 1 bis 8, **dadurch gekennzeichnet, dass** die Regeleinrichtung (3) zusammen mit der ersten und zweiten Durchflussreguliereinrichtung (4,5) eine Baugruppe bildet, die mittels Rast- oder Gewindeverbindungen (30) fest verbunden ist und als eine Einheit in das Gehäuse (2) oder den Anschlussstutzen (6) einschiebbar ist.

10. Armaturenkombination nach einem der Ansprüche 1 bis 9, **dadurch gekennzeichnet, dass** das Gehäuse (2) mit einem oder mehreren Messstutzen (31,32) zur Messung von Druck und/oder Temperatur versehen ist.

11. Armaturenkombination nach einem der Ansprüche 1 bis 10, **dadurch gekennzeichnet, dass** die Handhabe (7) mit Anschlägen (33) zur Begrenzung der Dreh- und/oder Hubbewegung ausgestattet ist.

12. Armaturenkombination nach einem der Ansprüche 1 bis 11, **dadurch gekennzeichnet, dass** die Regeleinrichtung (3) mittels der als Membran ausgebildeten Trennwand (20) einen Regelquerschnitt (14) differenzdruckgesteuert verändert, wobei die Membran (20) als Rollmembran mit konstanter wirkfläche ausgebildet ist, die einerseits über einen Druckkanal (37) vor der ersten Durchflussreguliereinrichtung (4) und andererseits über einen Druckkanal (38) hinter der zweiten Durchflussreguliereinrichtungen (5) beaufschlagt ist.

13. Armaturenkombination nach einem der Ansprüche 1 bis 12, **dadurch gekennzeichnet, dass** sie mittels der ersten und/oder der zweiten Durchflussreguliereinrichtung (4,5) flüssigkeitsdicht absperrbar ist.

14. Armaturenkombination nach einem der Ansprüche 1 bis 13, **dadurch gekennzeichnet, dass** die Handhabe (7) drehschlüssig, aber axial verschiebbar auf der Betätigungsspindel (23) befestigt ist und in einer ersten Hublage gegenüber dem Gehäuse (2) frei drehbar ist und in einer zweiten Hublage drehschlüssig mit dem Gehäuse (2) oder einen an diesem drehfest montiertem Teil, wie Schraubkappe (25) verriegelt ist.

15. Armaturenkombination nach einem der Ansprüche 1 bis 14, **dadurch gekennzeichnet, dass** die Handhabe (7) und die Befestigungsspindel (23) mit hubbegrenzenden Anschlägen (26,27) versehen sind.

16. Armaturenkombination nach einem der Ansprüche 1 bis 15, **dadurch gekennzeichnet, dass** die Handhabe (7) mit ein oder mehreren, drehbegrenzenden Anschlägen (33) zur Begrenzung der Drehbewegung ausgestattet ist, welche gegen einen Gehäuseanschlag wirken, wobei vorzugsweise der Gehäuseanschlag gleichzeitig als Zeiger (34) ausgebildet ist.

17. Armaturenkombination nach einem der Ansprüche 1 bis 16, **dadurch gekennzeichnet, dass** die Handhabe (7) mit ein oder mehreren, über den Gehäusedurchmesser vorstehenden schräg angeordneten umlaufenden Flächen versehen ist, auf welche eine Skala aufgebracht ist, welche die Stellung der sich überdeckenden Durchtrittsöffnungen (17,18) abbildet.

18. Armaturenkombination nach einem der Ansprüche 1 bis 17, **dadurch gekennzeichnet, dass** die Handhabe (7) durch einen Sicherungsring (35), der zwischen Handhabe (7) und Gehäuse (2) oder daran montierten Teilen, wie Schraubkappe (25) geschoben ist, in der zweiten Hublage gehalten werden kann.

19. Armaturenkombination nach einem der Ansprüche 1 bis 18, **dadurch gekennzeichnet, dass** die Handhabe (7) durch eine Feder (28) in eine der beiden Hublagen gedrückt ist und die zweite Hublage nur durch axiale Krafteinleitung auf die Handhabe (7) einstellbar ist.

20. Armaturenkombination nach Anspruch 18, **dadurch gekennzeichnet, dass** der Sicherungsring (35) mit einer über dem Gehäusedurchmesser vorstehende Handhabe (36) versehen ist.

21. Armaturenkombination nach Anspruch 20, **dadurch gekennzeichnet, dass** das die Handhabe (36) mit einer Plombierbohrung versehen ist.

22. Armaturenkombination nach Anspruch 21, **dadurch gekennzeichnet, dass** das der Gehäuseanschlag (34) mit einer Plombierbohrung versehen ist, welche mit der Plombierbohrung der Handhabe (36) in Überdeckung bringbar ist.

## Claims

1. A valve combination (1) for regulating the flow rate or the differential pressure in liquid-conveying heating or cooling systems, consisting of a one-piece or multi-piece housing (2) provided with a feed pipe (10), a discharge pipe (11) and a connection pipe (6) arranged therebetween, a regulator (3) arranged axially in the connection pipe (6), the regulator (3) being equipped with a movable partition (20) acted upon by a set point, which changes a variable cross section (14) in a differential-pressure-controlled manner by means of a seal (22) acting on a first seat (21), wherein the regulator (3) keeps the differential pressure constant at a preset value by means of a first flow regulator (4) also arranged axially in the connection pipe (6), the flow regulator (4) being adjustable by an actuating part (8) projecting from the housing (2) and acting on a second seat (24), and by means of a preset second flow regulator (5) arranged axially or coaxially thereto, wherein the flow cross section (9) is adjustable, **characterized in that** the flow cross section (9), when an actuator (29) is installed and acts on the actuating part (8), is adjustable by means of a handle (7) not covered by the actuator, and that, when the actuator (29) is installed, the position of the handle (7) can be read on a display unit (19), which is not covered by the actuator, and the display unit (19) indicates the presetting of the flow cross section (9).

2. The valve combination according to claim 1, **characterized in that** the arrangement is made in such a way that, in the direction of flow following the feed pipe (10), the first regulator (3) is arranged, then the first flow regulator (4), then the second flow regulator (5) and subsequently the discharge pipe (11).

3. The valve combination according to claim 1 or 2, **characterized in that**, in the direction of flow, the first regulator (3) is arranged first and then the first flow regulator (4), wherein the flow values are preset alternatively or in addition via an adjustable lift limiter of the first flow regulator (4).

4. The valve combination according to one of claims 1 to 3, **characterized in that** the movable partition (20) is configured as a membrane.

5. The valve combination according to one of claims 1 to 4, **characterized in that** the display unit (19) is a scale.

6. The valve combination according to one of claims 1 to 5, **characterized in that** the connection pipe (6) is open at both ends, that the flow cross section (9) of the second flow regulator (5) is adjustable with an actuating spindle (23) passing through the connection pipe (6) and provided with a handle (7), and that the actuating part (8) extends through the end (12) of the connection pipe (6) opposite the handle (7) to adjust the first flow regulator (4).

7. The valve combination according to one of claims 1 to 6, **characterized in that** the connection pipe (6) is furnished with fastening means (13) for the actuator (29) on its end (12) opposite the handle (7).

8. The valve combination according to one of claims 1 to 7, **characterized in that** the second flow regulator (5) is formed by at least two parts (15, 16), which can be reciprocally turned and/or shifted by means of the handle (7) and which are provided with overlapping openings (17, 18), wherein the size of the passage formed by the overlapping openings (17, 18) is adjustable by turning and/or shifting at least one of the parts (15, 16).

9. The valve combination according to one of claims 1 to 8, **characterized in that** the regulator (3) together with the first and second flow regulators (4, 5) forms an assembly which is securely joined by means of snap or screw connections (30) and which can be inserted into the housing (2) or the connection pipe (6) as a unit.

10. The valve combination according to one of claims 1 to 9, **characterized in that** the housing (2) is provided with one or more measuring connections (31, 32) for measuring pressure and/or temperature.

11. The valve combination according to one of claims 1 to 10, **characterized in that** the handle (7) is furnished with stops (33) for limiting the turning and/or lifting movement.

12. The valve combination according to one of claims 1 to 11, **characterized in that** the regulator (3) alters a variable cross section (14) in a differential-pressure-controlled manner by means of the partition (20) configured as a membrane, wherein the membrane (20) is designed as a roller membrane having a constant active surface which, on the one hand, is acted upon via a pressure duct (37) in front of the first flow regulator (4) and, on the other hand, by a pressure duct (38) behind the second flow regulator (5).

13. The valve combination according to one of claims 1 to 12, **characterized in that** it can be sealed so as to be impervious to liquid by means of the first and/or the second flow regulator (4, 5).

14. The valve combination according to one of claims 1 to 13, **characterized in that** the handle (7) is fastened so as to be resistant to twist yet axially movable on the actuating spindle (23) and freely pivotable in a first lift position relative to the housing (2) and, in a second lift position, is interlocked in a twist-resistant manner with the housing (2) or a part mounted thereon in a twist-resistant manner, e.g. by a screw cap (25).

15. The valve combination according to one of claims 1 to 14, **characterized in that** the handle (7) and the fastening spindle (23) are provided with lift-limiting stops (26, 27).

16. The valve combination according to one of claims 1 to 15, **characterized in that** the handle (7) is furnished with one or more turn-limiting stops (33) to limit the rotation, which act against a housing stop, wherein preferably the housing stop is at the same time configured as a pointer (34).

17. The valve combination according to one of claims 1 to 16, **characterized in that** the handle (7) is provided with one or more diagonal surfaces extending peripherally and projecting beyond the housing diameter, a scale being affixed to the surfaces, which shows the position of the overlapping openings (17, 18).

18. The valve combination according to one of claims 1 to 17, **characterized in that** the handle (7) can be held in the second lift position by a retaining ring (35), which is inserted between handle (7) and housing (2) or parts mounted thereon, e.g. a screw cap (25).

19. The valve combination according to one of claims 1 to 18, **characterized in that** the handle (7) is pressed into one of the two lift positions by a spring (28), and that the second lift position can only be adjusted by axial introduction of force onto the handle (7).

20. The valve combination according to claim 18, **characterized in that** the retaining ring (35) is provided with a handle (36) projecting beyond the housing diameter.

21. The valve combination according to claim 20, **characterized in that** the handle (36) is provided with a lead-seal bore.

22. The valve combination according to claim 21, **characterized in that** the housing stop (34) is provided with a lead-seal bore which can be brought to coincide with the lead-seal bore of the handle (36).

## Revendications

1. Système de robinetterie (1) permettant de réguler le débit ou la différence de pression dans des systèmes de chauffage ou de refroidissement à circulation de liquide, ledit système étant constitué d'un logement (2) fabriqué en une seule pièce ou plusieurs pièces et comprenant un raccord d'amenée (10), un raccord d'évacuation (11) et un raccord de liaison (6) disposé entre ces derniers, un dispositif de régulation (3) disposé de manière axiale dans le raccord de liaison (6) pourvu d'une paroi de séparation (20) mobile maintenant constante la différence de pression à une valeur prédéfinie, qui change au moyen d'une pièce de fermeture (22) agissant sur un premier siège (21) une section transversale variable (14) de manière commandée par la différence de pression, le dispositif de régulation (3) maintenant constante la différence de pression au moyen d'un premier dispositif de régulation de débit (4) disposé dans le raccord de liaison (6), également de manière axiale, qui peut être réglé par un élément d'actionnement (8) faisant saillie à partir du logement (2) et agissant sur un deuxième siège (24), et au moyen d'un deuxième dispositif de régulation du débit (5) préréglable, disposé de manière axiale ou coaxiale par rapport au premier dispositif de régulation de débit, la section transversale de débit (9) pouvant être réglée, **caractérisé en ce que**, lorsque le moyen de commande (29) est monté et agit sur l'élément d'actionnement (8), la section transversale de débit (9) peut être réglée au moyen d'une poignée (7) non cachée par ledit moyen de commande, et **en ce que**, lorsque le moyen de commande (29) est monté, la position de la poignée (7) peut être lue sur un dispositif indicateur (19) qui n'est pas caché par le moyen de commande, et le dispositif indicateur (19) indique le préréglage de la section transversale de débit (9).

2. Système de robinetterie selon la revendication 1, **caractérisé en ce que** la configuration est telle que dans la direction de débit en aval du raccord d'amenée (10), le premier dispositif de régulation (3), puis le premier dispositif de régulation de débit (4), puis le deuxième dispositif de régulation de débit (5) et après le raccord d'évacuation (11) est disposé.

3. Système de robinetterie selon la revendication 1 ou 2, **caractérisé en ce que** dans la direction de débit, d'abord le premier dispositif de régulation (3) et puis le premier dispositif de régulation de débit (4) est disposé, le préréglage des valeurs de débit se faisant alternativement ou en addition par l'intermédiaire d'un limiteur de course réglable du premier dispositif de régulation de débit (4).

4. Système de robinetterie selon une des revendications 1 à 3, **caractérisé en ce que** la paroi de séparation (20) mobile est réalisée sous la forme d'une membrane.

5. Système de robinetterie selon une des revendications 1 à 4, **caractérisé en ce que** le dispositif indicateur (19) est une échelle.

6. Système de robinetterie selon une des revendications 1 à 5, **caractérisé en ce que** le raccord de liaison (6) est ouvert aux deux extrémités, que la section transversale de débit (9) du deuxième dispositif de régulation de débit (5) peut être réglée au moyen d'une broche d'actionnement (23) passant à travers le raccord de liaison (6) et pourvue d'une poignée (7), et que l'élément d'actionnement (8) pour le réglage du premier dispositif de régulation de débit (4) passe à travers l'extrémité (12) du raccord de liaison (6) opposée à la poignée (7).

7. Système de robinetterie selon une des revendications 1 à 6, **caractérisé en ce qu'**à son extrémité (12) opposée à la poignée (7), le raccord de liaison (6) est pourvu de moyens de fixation (13) pour le moyen de commande (29).

8. Système de robinetterie selon une des revendications 1 à 7, **caractérisé en ce que** le deuxième dispositif de régulation de débit (5) est formé par au moins deux pièces (15, 16) réciproquement rotatives et déplaçables au moyen de la poignée (7), qui sont pourvues d'ouvertures de passage (17, 18) se chevauchant, la taille du passage formé par les ouvertures de passage (17, 18) se chevauchant pouvant être réglée par rotation et/ou déplacement d'au moins une des pièces (15, 16).

9. Système de robinetterie selon une des revendications 1 à 8, **caractérisé en ce que** le dispositif de régulation (3) avec le premier et deuxième dispositif de régulation de débit (4, 5) forme un groupe structurel, qui est connecté de manière fixe au moyen de liaisons à encliquetage ou à filet (30) et peut être introduit d'un seul bloc dans le logement (2) ou le raccord de liaison (6).

10. Système de robinetterie selon une des revendications 1 à 9, **caractérisé en ce que** le logement (2) est pourvu d'un ou de plusieurs raccords de mesure (31, 32) pour mesurer la pression et/ou la température.

11. Système de robinetterie selon une des revendications 1 à 10, **caractérisé en ce que** la poignée (7) est pourvue de butées (33) pour limiter le mouvement de rotation et/ou de levage.

12. Système de robinetterie selon une des revendications 1 à 11, **caractérisé en ce que** le dispositif de régulation (3) change une section transversale variable (14) de manière commandée par la différence de pression au moyen de la paroi de séparation (20) conçue sous la forme d'une membrane, la membrane (20) étant conçue sous la forme d'une membrane roulante ayant une surface d'action constante, qui à l'un côté est sollicitée par l'intermédiaire d'un conduit de pression (37) en amont du premier dispositif de régulation de débit (4) et à l'autre côté par l'intermédiaire d'un conduit de pression (38) en aval du deuxième dispositif de régulation de débit (5).

13. Système de robinetterie selon une des revendications 1 à 12, **caractérisé en ce qu'**il peut être bloqué au moyen du premier et/ou du deuxième dispositif de régulation de débit (4,5) en étant étanche au liquide.

14. Système de robinetterie selon une des revendications 1 à 13, **caractérisé en ce que** la poignée (7) est fixée sans tourner avec la broche d'actionnement (23), mais de manière axialement déplaçable sur celle-ci et peut tourner librement dans une première position de levage par rapport au logement (2) et est bloquée dans une deuxième position de levage sans tourner avec le logement (2) ou une pièce montée à celui-ci fixe en rotation, comme p.ex. un capuchon à visser (25).

15. Système de robinetterie selon une des revendications 1 à 14, **caractérisé en ce que** la poignée (7) et la broche de fixation (23) sont pourvues de butées (26, 27), qui limitent la course de déplacement.

16. Système de robinetterie selon une des revendications 1 à 15, **caractérisé en ce que** la poignée (7) est pourvue d'une ou de plusieurs butées (33) qui limitent le mouvement de rotation et qui agissent contre une butée du logement, de préférence la butée du logement étant conçue en même temps sous la forme d'une aiguille (34).

17. Système de robinetterie selon une des revendications 1 à 16, **caractérisé en ce que** la poignée (7) est pourvue d'une ou de plusieurs surfaces périphériques faisant saillie au-delà du diamètre du logement et étant disposées en biais, sur lesquelles une échelle graduée est appliquée, qui indique la position des ouvertures de passage (17, 18) se chevauchant.

18. Système de robinetterie selon une des revendications 1 à 17, **caractérisé en ce que** la poignée (7) peut être maintenue par une bague (35), qui est insérée entre la poignée (7) et le logement (2) ou des pièces montées à ceux-ci, comme p.ex. un capuchon à visser (25), dans la deuxième position de levage.

19. Système de robinetterie selon une des revendications 1 à 18, **caractérisé en ce que** la poignée (7) est poussée par un ressort (28) dans une des deux positions de levage, et la deuxième position de levage ne peut être réglée que par une application de force axiale sur la poignée (7).

20. Système de robinetterie selon la revendication 18, **caractérisé en ce que** la bague (35) est pourvue d'une poignée (36) faisant saillie au-delà du diamètre de logement.

21. Système de robinetterie selon la revendication 20, **caractérisé en ce que** la poignée (36) est pourvue d'un trou de plombage.

22. Système de robinetterie selon la revendication 21, **caractérisé en ce que** la butée du logement (34) est pourvue d'un trou de plombage, qui peut être amené an recouvrement avec le trou de plombage de la poignée (36).
